# EUROPEAN PATENT APPLICATION

(11) **EP 4 697 407 A1**
(43) Date of publication of application: **18.02.2026**
(21) Application number: 24788607.0
(22) Date of filing: 29.03.2024
(51) Int. Cl.: H01M 4/139, B05C 5/00, B05C 11/04, B05C 11/10, B05D 1/26, B05D 1/28, B05D 3/00, B05D 5/12, B05D 7/14, B05D 7/24

(54) **METHOD OF PRODUCING ELECTRODE LAYER**

(30) Priority: 13.04.2023 JP 2023065941
(71) Applicant: FUJIFILM Corporation, Tokyo 106-8620 (JP)
(72) Inventor: KODAMA, Taiga, ashigara-shi, Kanagawa 250-0193 (JP); IWASE, Eijiro, ashigara-shi, Kanagawa 250-0193 (JP); KOIKE, Takashi, ashigara-shi, Kanagawa 250-0193 (JP)
(74) Representative: Meissner Bolte Partnerschaft mbB
(86) International application number: PCT/JP2024/013344
(87) International publication number: WO 2024/214580

(57) **Abstract**

An embodiment of the present invention is a method for manufacturing an electrode layer, including a step A of supplying an electrode material which contains an electrode active material, a conductive auxiliary agent, and an electrolytic solution, and has a concentration of solid components of 40% by volume to 80% by volume onto a collector foil using a screw pump, and a step B of leveling the electrode material supplied onto the collector foil to form an electrode layer on the collector foil, in the screw pump includes a cylindrical housing that has, at one end, a supply port through which the electrode material is supplied, and has, at the other end, a discharge port through which the electrode material is discharged, a screw that is installed rotatably in the cylindrical housing and has a pitch region having a helical pitch decreasing in a downstream discharge direction of the electrode material, and a shielding material that is disposed at the discharge port, and the shielding material has a surface intersecting an axial direction of the screw and a through-hole penetrating the surface, the surface faces a downstream edge surface of a screw blade of the screw in a noncontact manner, and the through-hole is provided at a position facing the downstream edge surface.

## Description

### BACKGROUND OF THE INVENTION

### 1. Field of the Invention

The present disclosure relates to a method for manufacturing an electrode layer.

### 2. Description of the Related Art

In recent years, from the viewpoint of safety, studies on a quasi-solid-state battery in which a part of an electrolytic solution is replaced with a solid electrolyte have been carried out. In manufacturing of an electrode for a battery, using a powder containing an electrode active material, generally, a step of applying an electrode material containing an electrode active material or the like, which is the powder, onto a support is included.

Regarding the manufacturing of the electrode for a battery using the powder, for example, it is disclosed that an electrode slurry obtained by mixing a quasi-solid-state electroactive material and the like in advance is applied along a surface of a collector using a doctor blade (for example, refer to JP2017-533548A).

In addition, a technique for manufacturing a molded body for an electrode, having excellent in-plane uniformity of mass distribution by supplying a pre-mixed electrode material to a rectangular tubular shape maintaining member and discharging the electrode material compressed until reaching an opening portion of the maintaining member to a support is disclosed (for example, refer to WO2021/033689A). A method for manufacturing an electrode for a lithium ion battery, in which a powder containing an electrode active material supplied onto a substrate is squeegeeed with a squeegee roll to form a powder layer, and then the substrate is transported vertically downward while a pair of press rolls is used to compress the powder layer onto the substrate to manufacture an electrode sheet, is disclosed (for example, refer to WO2016/111137A).

### SUMMARY OF THE INVENTION

In a case of manufacturing an electrode for a battery using a powder, an electrode layer is formed using a prepared electrode material in advance, but it is difficult to stably produce an electrode layer in which a thickness of the electrode layer is likely to vary and in-plane uniformity in density is favorable. However, it is considered that the electrode layer, which is one of main configurations of the battery, is an important element in that a material density in an in-plane direction is uniform from the viewpoint of battery performance.

As in the above-described related arts, the film formation is generally carried out after mixing materials such as an active material and an electrolytic solution in advance. The pre-mixed material is likely to be in a state in which air is mixed into the active material, the electrolytic solution, and the like. In a case of general diluted coating, a large amount of air is rarely mixed, but in a case of an electrode layer containing a relatively large amount of solid contents of the powder, the presence of air mixed during the manufacturing cannot be ignored. That is, depending on the supply method of the pre-mixed material, the density state in the supplied mixed material is likely to fluctuate, and it is difficult to uniformly control the density state in the produced electrode layer. In addition, in a case where a mixed material (coating material) prepared by mixing the active material, the electrolytic solution, and the like to be in a clay-like state is formed into a film by feeding under pressure, pressure is generally applied to the mixed material in an accumulative manner, so that pressure applied at the start of feeding (initial stage) and pressure applied at the end of feeding (final stage) are not uniform. As a result, there is a problem in that the material density of the produced electrode layer is not easily uniform in the in-plane direction. In addition, in a case where the mixed material in which desired material are mixed in advance is used in the same manner, pressure received by the self-weight over time during storage is different above and below the mixed material (coating material) in the direction of gravitational force (for example, the vicinity of the liquid surface and the bottom portion in a case where the mixed material is accommodated in a storage container), so that the material state is densified as the bottom portion is closer to the bottom portion, and as a result, the density state of the produced electrode layer is likely to be non-uniform. This point is not limited to the produced single electrode layer, and for example, it is assumed that the same non-uniformity occurs between electrode layers in a case where a plurality of the electrode layers are produced in a sheet shape.

The present disclosure has been made in view of the above-described circumstances.

An object to be achieved by one embodiment of the present disclosure is to provide a method for manufacturing an electrode layer, in which an electrode layer having high uniformity of a material density is manufactured.

The specific methods for achieving the above-described object include the following aspects.
<1> A method for manufacturing an electrode layer, comprising:
   a step A of supplying an electrode material which contains an electrode active material, a conductive auxiliary agent, and an electrolytic solution, and has a concentration of solid components of 40% by volume to 80% by volume onto a collector foil using a screw pump; and
   a step B of leveling the electrode material supplied onto the collector foil to form an electrode layer on the collector foil,
   in which the screw pump includes
      a cylindrical housing that has, at one end, a supply port through which the electrode material is supplied, and has, at the other end, a discharge port through which the electrode material is discharged,
      a screw that is installed rotatably inside the cylindrical housing and has a pitch region having a helical pitch decreasing in a downstream discharge direction of the electrode material, and
      a shielding material that is disposed at the discharge port, and
   the shielding material has a surface intersecting an axial direction of the screw and a through-hole penetrating the surface, the surface faces a downstream edge surface of a screw blade of the screw in a noncontact manner, and the through-hole is provided at a position facing the downstream edge surface.
<2> The method for manufacturing an electrode layer according to <1>,
   in which the shielding material supports one end of the screw on a downstream side of an axial core of the screw.
<3> The method for manufacturing an electrode layer according to <1> or <2>,
   in which a clearance between the surface intersecting the axial direction and the downstream edge surface of the screw blade is 3 mm or less.
<4> The method for manufacturing an electrode layer according to any one of <1> to <3>,
   in which the screw pump has a first screw pump and a second screw pump which is connected to the first screw pump through a pipe and has a smaller discharge volume than the first screw pump, and the first screw pump and the second screw pump include the cylindrical housing, the screw, and the shielding material.
<5> The method for manufacturing an electrode layer according to any one of <1> to <4>,
   in which the shielding material has two or more of the through-holes, and the two or more of the through-holes are provided at regular intervals along a circumferential direction of the screw.
<6> The method for manufacturing an electrode layer according to any one of <1> to <5>,
   in which the helical pitch in the pitch region is changed by 50% or more.
<7> The method for manufacturing an electrode layer according to any one of <1> to <6>,
   in which, in the step A, the electrode active material, the conductive auxiliary agent, and the electrolytic solution are supplied to the screw pump without being mixed in advance.

According to one embodiment of the present disclosure, there is provided a method for manufacturing an electrode layer, in which an electrode layer having high uniformity of a material density is manufactured.

### BRIEF DESCRIPTION OF THE DRAWINGS

FIG. 1 is a schematic view for describing a part where an electrode layer is manufactured.
FIG. 2 is an enlarged schematic cross-sectional view showing a downstream side in a discharge direction of a screw pump.
FIG. 3 is a schematic cross-sectional view for describing a flow of an electrode material generated in a case where the electrode material is subjected to shearing and pressure from a screw.
FIG. 4 is a schematic configuration view showing a structure in the vicinity of an extrusion port of an extruder in the related art.
FIG. 5 is a side view of an example of a screw as viewed from a side.
FIG. 6 is a schematic plan view of the screw pump of FIG. 2 as viewed from a discharge side.

### DESCRIPTION OF THE PREFERRED EMBODIMENTS

Hereinafter, the method for manufacturing an electrode layer according to the present disclosure will be described. However, the present disclosure is not limited to the following embodiments, and can be implemented with appropriate modification within the scope of the object of the present disclosure.

In a case where the embodiments of the present disclosure are described with reference to the drawings, the description of overlapping constituent elements and reference numerals may be omitted. The constituent elements indicated by the same reference numeral in the drawings mean the same constituent element. A dimensional ratio in the drawings does not necessarily represent the actual dimensional ratio.

In the present disclosure, the numerical ranges shown using "to" indicate ranges including the numerical values described before and after "to" as the lower limit value and the upper limit value. In a numerical range described in a stepwise manner in the present disclosure, an upper limit described in a certain numerical range may be replaced with an upper limit in another numerical range described in a stepwise manner or a value described in an example; and a lower limit described in a certain numerical range may be replaced with a lower limit in another numerical range described in a stepwise manner or a value described in an example. In a numerical range described in the present disclosure stepwise, an upper limit or a lower limit described in a certain numerical range may be replaced with a value described in Examples.

In the present disclosure, a combination of two or more preferred aspects is a more preferred aspect.

Furthermore, in the present specification, in a case where a plurality of substances corresponding to each component in a composition is present, the amount of each component in the composition means the total amount of the plurality of substances present in the composition, unless otherwise specified.

In the present specification, a term "step" denotes not only an individual step but also a step which is not clearly distinguishable from another step as long as an effect expected from the step can be achieved.

In the present specification, "% by mass" has the same definition as "% by weight", and "part by mass" has the same definition as "part by weight".

In addition, "total solid content" refers to a total mass of components obtained by removing a solvent from the total formulation of a composition. The "solid content" may be a solid or a liquid at 25°C.

The method for manufacturing an electrode layer according to the present disclosure includes a step A of supplying an electrode material which contains an electrode active material, a conductive auxiliary agent, and an electrolytic solution, and has a concentration of solid components of 40% by volume to 80% by volume onto a collector foil using a screw pump (hereinafter, also simply referred to as a step A), and a step B of leveling the electrode material supplied onto the collector foil to form an electrode layer on the collector foil (hereinafter, also simply referred to as a step B); and may include other steps as necessary.

In the method for manufacturing an electrode layer according to the present disclosure, the screw pump includes a cylindrical housing that has, at one end, a supply port through which the electrode material is supplied, and has, at the other end, a discharge port through which the electrode material is discharged, a screw that is installed rotatably inside the cylindrical housing and has a pitch region having a helical pitch decreasing in a downstream discharge direction of the electrode material, and a shielding material that is disposed at the discharge port of the cylindrical housing. The shielding material has a surface (hereinafter, also referred to as "shielding surface") intersecting an axial direction of the screw and a through-hole penetrating the shielding surface, the shielding surface faces a downstream edge surface of a screw blade of the screw in a noncontact manner, and the through-hole is provided at a position facing the downstream edge surface.

In a case of manufacturing, as an electrode layer applied to a quasi-solid-state battery, an electrode layer containing an electrode active material, a conductive auxiliary agent, and an electrolytic solution and having a high concentration of solid components of 40% by volume or more on a collector foil, from the viewpoint of improving the performance of the quasi-solid-state battery, it is desired to achieve a technique capable of controlling a material density of the produced electrode layer to a uniform state and stably and uniformly homogenizing the material density of the electrode layer in an in-plane direction. In addition, it is not limited to the uniformization in a single electrode layer, and the same applies to the uniformization of the material density between electrode layers in a case of manufacturing a plurality of the electrode layers in a sheet shape, for example.

In the method of the related art, in a case where a kneaded material (coating material) prepared by mixing the active material, the electrolytic solution, and the like to be in a clay-like state is formed into a film by feeding under pressure, pressure is generally applied to the kneaded material in an accumulative manner, so that pressure applied at the start of feeding and pressure applied at the end of feeding are not uniform. In addition, in the case where the kneaded material is accommodated in a storage container in the same manner, pressure applied to a surface part and a bottom part of the kneaded material due to the self-weight is different over time, and pressure applied to an upper part and a lower part of the kneaded material is not uniform in a direction of gravitational force. That is, the kneaded material is partially densified due to the influence of the self-weight as the bottom part. As a result, a material density in the manufactured electrode layer is likely to be non-uniform, and it is difficult to obtain uniformity of the material density. This is particularly likely to be remarkable in a case where an electrode material which has been mixed in advance is used.

In view of the above-described circumstances, in the present disclosure, a specific screw pump capable of supplying, onto a collector foil, an electrode material obtained by a method of mixing and densifying materials is selected. That is, the electrode material obtained by mixing and densifying each component of the electrode material in the screw pump is supplied onto the collector foil without necessarily mixing each component of the electrode material in advance. Specifically, the electrode material obtained by supplying and mixing each component of the electrode material to the screw pump, and pressurizing and densifying the electrode material while applying shearing force in the screw pump is supplied onto a collector foil. As a result, in a case where the electrode material is uniformly applied in the next step to manufacture an electrode layer, the amount of air mixed into the electrode layer is small and suppressed, and thus the material density can be made to be uniformly high in the in-plane direction, and an electrode layer having excellent uniformity of the material density can be obtained. This is effective in a case where the electrode layer has a long length and a large area (for example, 500 mm² to 700 mm²). In addition, for example, the uniformity of the material density between the electrode layers in a case of manufacturing a plurality of the electrode layers in a sheet shape is also improved.

### <Step A>

In the step A of the method for manufacturing an electrode layer according to the present disclosure, an electrode material containing an electrode active material, a conductive auxiliary agent, and an electrolytic solution and having a concentration of solid components of 40% by volume to 80% by volume is supplied onto a collector foil using a screw pump.

The electrode material supplied in the step A has a concentration of solid components of 40% by volume to 80% by volume, and the concentration of solid components is high for a material generally used for film formation by coating or the like. Therefore, in a case of forming a film on the collector foil, such an electrode material has properties in which it is difficult to directly manufacture an electrode layer having a desired thickness, and for example, it is manufactured by smoothing with a member such as a blade. The electrode layer is a portion which influences superiority or inferiority of the battery performance; and in a case where the density of the material forming the electrode layer varies, the battery performance is also likely to vary. In the present disclosure, in order to uniformly control the density state of the material forming the electrode layer, the electrode material is supplied onto the collector foil using a specific screw pump.

The concentration of solid components of the electrode material is not limited as long as it is within the above-described range, but it is preferably higher from the viewpoint of battery performance, and it is preferably more than 50% by volume and 80% by volume or less, and more preferably 60% by volume to 80% by volume. The concentration of solid components in the electrode material is calculated from a compositional ratio of each component contained in the electrode material and a specific gravity of the components.

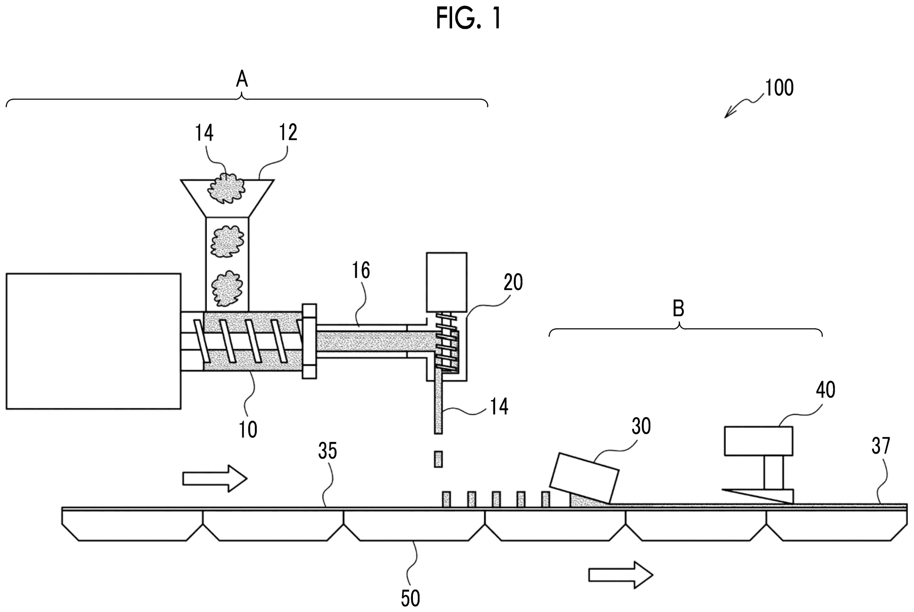

Here, an example of the step A will be described with reference to FIG. 1. FIG. 1 is a schematic view for describing a part where an electrode layer is manufactured.

FIG. 1 shows a manufacturing apparatus 100 for an electrode layer. The manufacturing apparatus 100 for an electrode layer is configured with a supply section A and a film forming section B. The supply section A of the manufacturing apparatus 100 for an electrode layer has a first screw pump 10 and a second screw pump 20 connected to the first screw pump 10 by a connection pipe 16. The first screw pump 10 includes at least a cylindrical housing, a screw installed inside the cylindrical housing, and a shielding material disposed at a discharge port of the cylindrical housing, and a charging hopper 12 is attached to one end side of the cylindrical housing so that the electrode material can be supplied to the first screw pump 10. The second screw pump 20 is a small pump having a smaller discharge volume than the first screw pump 10, and discharges the electrode material in a stepwise manner by screws having different sizes. As a result, the electrode material can be further densified, and pulsation of the electrode material, which is likely to occur for each pitch of the screw during the discharging, can be suppressed. A pallet 50 for transporting a collector foil 35 in the arrow direction is disposed in a direction in which the electrode material is discharged from the second screw pump 20. In the film forming section B on the downstream side in a transport direction of the pallet 50, a blade 30 for molding the electrode material and a piezoelectric blade 40 for adjusting a thickness of the electrode material molded into a certain shape are sequentially disposed in the arrow direction.

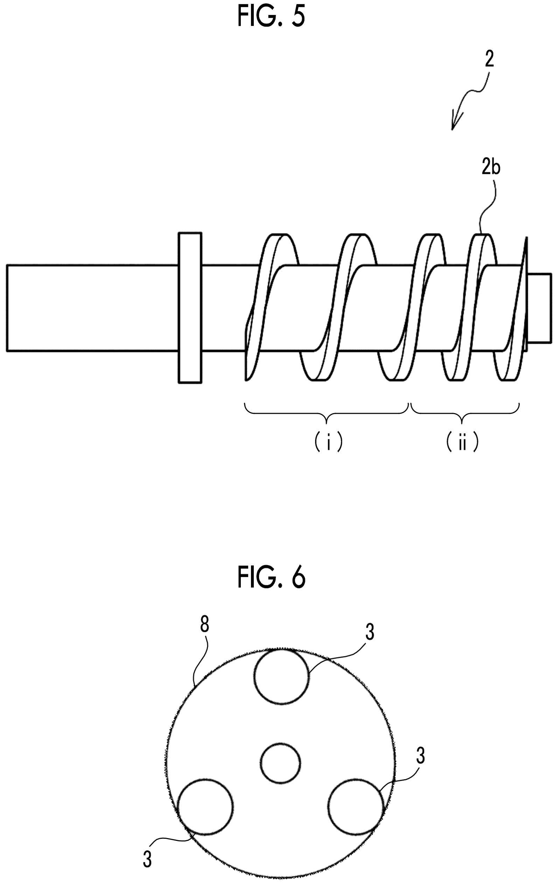

As the electrode material is charged into the charging hopper 12 of the manufacturing apparatus 100 for an electrode layer, the electrode material 14 is supplied to the first screw pump 10. As the screw installed in the cylindrical housing of the first screw pump 10 is activated and the rotation is started, an electrode material 14 is sent toward the other end of the cylindrical housing having the discharge port by a rotating screw blade 2b (see FIG. 5). The electrode material 14 is discharged to the connection pipe 16 from the other end of the cylindrical housing having the discharge port, and is supplied to the second screw pump 20 through the connection pipe 16. One end of the connection pipe is connected to one end side of the cylindrical housing of the second screw pump 20. As the screw installed in the cylindrical housing of the second screw pump 20 is activated and the rotation is started, the electrode material 14 is sent toward the other end of the cylindrical housing having the discharge port by a rotating screw blade. The electrode material 14 is discharged from the other end of the cylindrical housing having the discharge port, and is supplied onto the collector foil 35 on the pallet 50. The electrode material is continuously or intermittently supplied onto the collector foil in a string-like shape from a through-hole provided in a shielding material disposed at the other end (discharge port) of the cylindrical housing.

Next, the process proceeds to the step B. Details of the step B will be described later.

Next, the screw pump will be described.

The screw pump in the present disclosure includes at least a cylindrical housing, a screw installed inside the cylindrical housing, and a shielding material disposed at a discharge port of the cylindrical housing. In the screw pump, the electrode material supplied from a supply port provided at one end of the cylindrical housing is mixed while being fed toward the other end of the cylindrical housing in a longitudinal direction by a rotating screw; and while the electrode material approaches the other end, the electrode material receives a pressure while being sheared from a surface of a screw blade and an inner wall surface of the cylindrical housing in a pitch region where a helical pitch is decreased. In this manner, the electrode material is densified.

For the same reason, it is preferable that the screw has a structure in which a conveyor portion having a helical pitch at regular intervals is provided on the upstream side in the longitudinal direction, and in which a densification extrusion portion having a helical pitch narrower than the helical pitch of the conveyor portion is provided on the downstream side with respect to the conveyor portion.

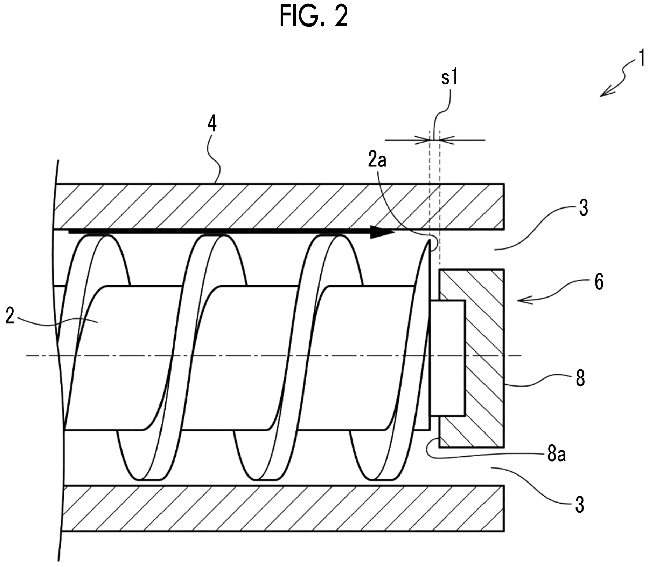

FIG. 2 shows an example of the screw pump. FIG. 2 is an enlarged schematic cross-sectional view showing a downstream side in a discharge direction of the screw pump.

A screw pump 1 shown in FIG. 2 includes at least a cylindrical housing 4, a screw 2 installed inside the cylindrical housing 4, and a shielding material 8 disposed at a discharge port 6 of the cylindrical housing 4. The shielding material 8 has a shielding surface 8a intersecting an axial direction of the screw 2 and a through-hole 3 penetrating the shielding surface 8a, the shielding surface 8a faces a downstream edge surface 2a of a screw blade of the screw in a noncontact manner, and the through-hole 3 is provided at a position facing the downstream edge surface 2a. The shielding material 8 is in contact with and supports one end of the screw 2 on the downstream side of an axial core of the screw 2(discharge direction of the electrode material).

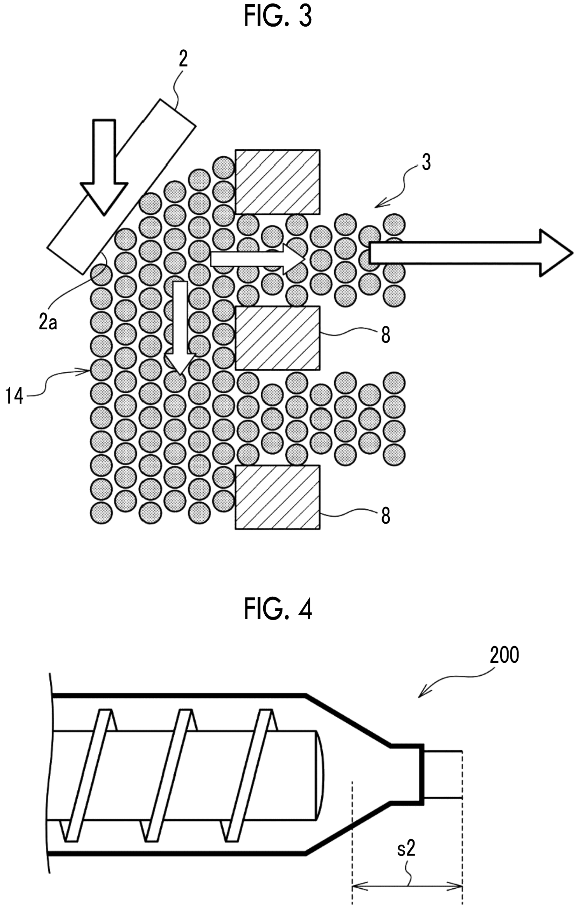

The screw pump 1 discharges the electrode material in the arrow direction by the rotation of the screw 2. In the vicinity of the downstream discharge port 6, the downstream edge surface 2a of the screw 2 repeatedly passes through the position of the through-hole 3 by the rotation of the screw. In a case where the electrode material is guided to the vicinity of the discharge port 6 while being guided by the screw blade, the electrode material 14 is discharged to the outside from the through-hole 3 which is not shielded by the shielding material 8, due to the shearing force and the pressure from the downstream edge surface 2a and the inner wall surface of the screw 2, as shown in FIG. 3.

Here, an extruder including a screw in the related art is shown in FIG. 4.

In a case of an extruder 200 in the related art, the cylindrical housing and the screw are provided as shown in FIG. 4, but an outlet is provided at an end part of a structure in which a cross-sectional area of a cross section orthogonal to an axial direction toward an extrusion direction in the cylindrical housing gradually decreases, that is, a structure in which an inner wall surface is inclined in a cross-sectional view parallel to a longitudinal direction and thus the height and the width are narrowed. In other words, since there is no shielding material which shields the extrusion of the kneaded material in the extrusion direction in the cylindrical housing, the screw does not have a surface intersecting the axial direction. Therefore, the extruder 200 only performs the kneading; but the electrode material cannot be prepared while kneading as in the method for manufacturing an electrode layer according to the present disclosure, and the prepared electrode material cannot be supplied onto a collector foil after being subjected to compression and densification while being sheared. As a result, in the electrode layer formed by smoothing the electrode material in the next step, it is difficult to make the material density uniform due to a large amount of air being mixed, and thus it is difficult to form an electrode layer having high uniformity of the material density.

It is preferable that the screw pump in the present disclosure is provided with a conductivity meter which measures conductivity of the electrode material inside (for example, on the inner wall surface) the other end (end part in the discharge direction of the electrode material) of the cylindrical housing. Since the electrode material is prepared by mixing the electrolytic solution and the active material in advance, it is possible to measure the electrical resistance in a portion having a desired density state, and it is possible to monitor the state of the electrode material (for example, a change in conductivity due to fluidization). Examples of the conductivity meter include a conductivity probe and a conductivity sensor.

### -Cylindrical housing-

The cylindrical housing has, at one end, a supply port through which the electrode material is supplied, and has, at the other end, a discharge port through which the electrode material is discharged. The term "cylindrical" includes not only a case in which the shape of the housing itself is cylindrical but also a housing which has a cylindrical room (cylindrical inner room) inside and is formed in a cylindrical shape as viewed from the screw to be installed, even in a case where the outer shape of the housing is not a cylindrical shape.

The supply port is not limited as long as it has a structure in which the electrode material can be charged and the electrode material can be supplied into the cylindrical housing. For example, a container (hopper or the like) having a reverse conical shape, a reverse square pyramid shape, or the like may be attached to the supply port.

The discharge port is not limited as long as it has a structure in which the prepared electrode material can be taken out to the outside.

In the step A according to the present disclosure, it is preferable that the electrode material components including the electrode active material, the conductive auxiliary agent, and the electrolytic solution are put into the supply port of the cylindrical housing without being mixed in advance, and each component (the electrode active material, the conductive auxiliary agent, the electrolytic solution, and the like) of the electrode material is directly supplied to the screw pump.

### -Screw-

The screw is installed rotatably in the above-described cylindrical housing.

The screw has a solid axial core and a screw blade formed to be wound around the axial core in a longitudinal direction of the axial core. The screw is not limited by the size of the screw blade as long as the screw can be rotated in the cylindrical housing.

In a positional relationship between the screw and the cylindrical housing, the shortest distance between the screw blade of the screw and the inner wall surface of the cylindrical housing is preferably 10 mm or less, more preferably 5 mm or less, and still more preferably 3 mm or less. In a case where the shortest distance is 10 mm or less, shearing and pressure are stably applied to the electrode material, and thus the material density can be more uniformly densified.

The lower limit of the shortest distance can be set to 0.01 mm.

The screw has a pitch region where a helical pitch decreases in a downstream discharge direction of the electrode material. The helical pitch is a distance between a screw blade positioned on a line parallel to the axial core of the screw, and an adjacent screw blade.

FIG. 5 is a side view of an example of the screw as viewed from a side. The screw 2 shown in FIG. 5 has a conveyor portion (i) having a helical pitch at regular intervals on the upstream side in the longitudinal direction, and a densification extrusion portion (ii) having a helical pitch narrower than the helical pitch of the conveyor portion (i) on the downstream side of the conveyor portion. In this manner, the electrode material is mainly discharged in the conveyor portion (i); and in the subsequent densification extrusion portion (ii), the helical pitch is narrowed, and the electrode material is densified by applying a pressure while shearing the electrode material.

In the helical pitch, it is preferable that a helical pitch L1 of the conveyor portion (i) and a helical pitch L2 of the densification extrusion portion (ii) satisfy a relationship of L1 > L2. In addition, the helical pitch of the densification extrusion portion may be different in a stepwise manner. For example, in a case where the helical pitch of the densification extrusion portion is two-stage of a front half part L2a and a rear half part L2b (L2a > L2b), the helical pitch may satisfy a relationship of L1 > L2a > L2b as a whole. The number of stages is not limited to 2, and an aspect in which the number of stages is 3 may be adopted. Furthermore, the helical pitch may be in an aspect in which the relationship of L1 > L2 is satisfied and the helical pitch L2 is gradually decreased in the densification extrusion portion.

In a case where the helical pitch of the screw is narrowed, a flow velocity of a continuous phase is increased, and thus a shearing force of the continuous phase can be increased. On the contrary, in a case where the helical pitch is widened, the flow velocity of the continuous phase is decreased, and thus the shearing force of the continuous phase can be decreased.

The range of the helical pitch of the screw blade is preferably 1 mm to 50 mm, and more preferably 2 mm to 20 mm.

In the pitch region where the helical pitch decreases in the downstream discharge direction of the electrode material, the helical pitch from the widest pitch to the narrowest pitch is preferably changed by 30% or more, and more preferably changed by 50% or more. In a case where the ratio of change in helical pitch is 30% or more, shear and pressure are likely to be applied to the electrode material, and thus the uniformity of the material density can be further improved.

A clearance (gap) between the screw blade of the screw and the inner wall surface of the cylindrical housing is preferably 0.5 mm or less, and more preferably 0.4 mm or less. In a case where the clearance is 0.5 mm or less, it is easy to apply shearing and pressure to the electrode material. In this manner, the electrode material can be further densified.

The clearance between the screw blade and the inner wall surface of the cylindrical housing is an absolute value of a difference between an outermost diameter of the screw blade of the screw and an inner diameter of the cylindrical housing.

The clearance between the screw blade and the inner wall surface of the cylindrical housing can be reduced by increasing the thickness of the axial core of the screw, increasing an outer diameter of the screw blade, or reducing the inner diameter of the cylindrical housing.

The thickness of the screw blade is not particularly limited, and is preferably in a range of 0.1 mm to 5 mm and more preferably in a range of 0.3 mm to 2 mm.

### -Shielding material-

The shielding material is disposed at the discharge port of the cylindrical housing. The shielding material has a surface (shielding surface) intersecting an axial direction of the screw and a through-hole penetrating the shielding surface, the shielding surface faces a downstream edge surface of a screw blade of the screw in a noncontact manner, and the through-hole is provided at a position facing the downstream edge surface.

Since the shielding material is disposed at the discharge port of the cylindrical housing, the discharging of the electrode material to the outside is shielded at an end part in the discharge direction of the electrode material, and only the electrode material which can be discharged from the through-hole provided in the shielding material is densified and discharged while being subjected to predetermined shearing and pressure. As a result, an electrode material in which the air mixing is small on the collector foil and the density of the solid material is increased is supplied.

The shielding material has the shielding surface intersecting the axial direction of the screw. The shielding surface can be selected within a range in which the electrode material sent to the downstream side of the cylindrical housing by the screw is not easily discharged to the outside; and from the viewpoint of effectively exhibiting the above-described function, an angle formed between the axial direction and the shielding surface is preferably in a range of an acute angle θ of 70° ≤ θ ≤ 90°, more preferably in a range of 80° ≤ θ ≤ 90°, still more preferably in a range of 85° ≤ θ ≤ 90°, and particularly preferably a plane orthogonal to the axial direction of the screw. The "orthogonal to the axial direction" refers to an angle in which the angle formed between the axial direction and the shielding surface is 90° or an angle in which the deviation from 90° is a maximum of 2°.

The shielding material has the through-hole penetrating the shielding surface. The through-hole is an opening portion selectively provided at the discharge port of the cylindrical housing, and the electrode material is discharged through the through-hole. At least one through-hole is provided in the shielding material, and the number of through-holes may be 2 or more, 3 or more, or 4 or more, depending on the size and the thickness of the electrode layer to be manufactured, the manufacturing speed of the electrode layer, the size of the shielding material, the size of the through-hole, and the like. The upper limit of the number of through-holes may be 12. The preferred number of through-holes is 3 to 8.

A shape of the through-hole is not particularly limited, and may be, for example, any of a circular shape, an elliptical shape, or a rectangular shape. A hole diameter of the through-hole may be selected according to the thickness of the electrode material sent to a long shape such as a string shape, and is preferably 1 mm to 30 mm, more preferably 2 mm to 25 mm, and still more preferably 2 mm or more and less than 10 mm. In a case where the hole diameter is within the above-described range, the electrode material is easily leveled in the step B, and an electrode layer having a desired thickness is easily manufactured. In a case where a small pump having a small jetting amount is disposed, it is preferable that the size of the through-hole is smaller than a diameter of an upstream pump. As a result, it is possible to supply an electrode which is thinner and easier to apply. The size of the through-hole can be appropriately designed according to the size of the screw blade. It is suitable that the size of the through-hole is smaller than the end of the screw blade from the axis of the screw blade (that is, a radius of the screw).

The hole diameter of the through-hole refers to the maximum diameter of the hole.

The shielding surface faces the downstream edge surface of the screw blade of the screw in a noncontact manner. The screw is disposed to face the shielding surface without coming into contact with the shielding surface, whereby the shear and pressure can be effectively applied to the electrode material. For the same reason, a clearance between the shielding surface and the downstream edge surface of the screw blade is preferably 3 mm or less, and more preferably 1.5 mm or less. In a case where the clearance is 3 mm or less, the shear and pressure can be more effectively applied to the electrode material. In this manner, the densification of the electrode material can be further enhanced. In addition, the lower limit value of the clearance can be set to 0.01 mm.

The clearance will be described with reference to FIG. 2. As shown in FIG. 2, the clearance refers to a shortest distance s1 between the shielding surface 8a of the shielding material 8 and the downstream edge surface 2a of the screw blade of the screw 2. A clearance s2 in the extruder 200 of the related art shown in FIG. 4 may be a shape which can be extruded by forming a narrow mouth-shaped outlet compared to the body portion in which the screw is disposed, and it is distinguished from a clearance s1 of the screw pump in the present disclosure in that the application of shearing is not assumed.

The through-hole is provided at a position facing the downstream edge surface. The downstream edge surface is a surface positioned at the most downstream end of the screw blade in the discharge direction of the electrode material, and is, for example, a surface indicated by reference numeral 2a in a case of the screw pump shown in FIG. 2. The "position facing" refers to a position facing the downstream edge surface in the shielding material, and the electrode material is discharged from the through-hole by facing the downstream edge surface and the through-hole at this position.

It is preferable that the shielding material has two or more of the through-holes, and the two or more of the through-holes are provided at regular intervals along a circumferential direction of the screw. That is, it is preferable that the through-holes are arranged in the circumferential direction of the screw so that the electrode material having high density uniformity, which is fluidized and densified by shearing with the screw blade, is preferentially discharged. For example, as shown in FIG. 6, an aspect in which the shielding material 8 has three through-holes and the three through-holes are provided at regular intervals (that is, vertex positions of an equilateral triangle) along the circumferential direction of the screw may be adopted. In this case, the downstream edge surface of the screw 2 sequentially reaches the positions of the three through-holes 3 in accordance with the rotation of the screw, and the electrode material is sequentially discharged from the three through-holes sequentially reached in the rotation direction (counterclockwise in FIG. 6) of the screw.

FIG. 6 is a schematic plan view of the screw pump of FIG. 2 as viewed from the discharge side.

The shielding material is preferably in a form of supporting one end of the screw on the downstream side of the axis of the screw (downstream discharge direction side of the electrode material). Such a structure is distinguished from the screw of the extruder in the related art.

The screw pump may be used alone, or two or more screw pumps may be used by being connected to each other through a pipe. In a case where a plurality of screw pumps are used, screw pumps having different pump sizes may be combined.

In the present disclosure, a combination of a first screw pump and a small second screw pump which is connected to the first screw pump through a pipe and has a smaller discharge volume than the first screw pump may be used. The "small" refers to a scale in which the volume of the electrode material which can be accommodated is small, and thus the discharge volume of the electrode material discharged per unit time by the rotation of the screw is relatively small. In this case, it is preferable that both the first screw pump and the second screw pump include the cylindrical housing, the screw, and the shielding material.

### (Collector foil)

The collector foil includes a collector foil used for a positive electrode collector or a negative electrode collector.

Examples of the positive electrode collector include aluminum, an aluminum alloy, stainless steel, nickel, and titanium. The positive electrode collector is preferably aluminum or an aluminum alloy. The positive electrode collector may be aluminum having, on a surface thereof, a coating layer containing one or more of carbon, nickel, titanium, silver, gold, platinum, and vanadium oxide.

Examples of the negative electrode collector include aluminum, copper, a copper alloy, stainless steel, nickel, and titanium. The negative electrode collector is preferably aluminum, copper, a copper alloy, or stainless steel, and more preferably copper or a copper alloy. The negative electrode collector may be copper or stainless steel, having, on a surface thereof, a coating layer containing one or more of carbon, nickel, titanium, silver, and lithium.

The collector foil is preferably an aluminum foil (including an aluminum foil having the above-described coating layer on the surface thereof) or a copper foil (including a copper foil having the above-described coating layer on the surface thereof). The aluminum foil is generally used as the positive electrode collector. The copper foil is generally used as the negative electrode collector.

In addition, a resin film may be provided as a support material in the collector foil.

Examples of the support material include a resin film. Examples of the resin film include resin film such as a polyethylene terephthalate (PET) film, a polypropylene (PP) film, a polyethylene (PE) film, a cyclic olefin polymer (COP or COC) film, a triacetyl cellulose (TAC) film, a polyimide (PI) film, and a polyamide (PA) film.

In addition, a release material can also be mentioned as an example of the support material. Examples of the release material include release paper (for example, peeling paper manufactured by LINTEC Corporation), a film having a release layer, and paper having a release layer; and among these, release paper is preferable.

Next, each component of the electrode material will be described.

The electrode material contains at least an electrode active material, a conductive auxiliary agent, and an electrolytic solution, and may contain other components as necessary.

### (Electrode active material)

The electrode active material is a substance capable of intercalating and deintercalating ions of a metal element belonging to Group 1 or Group 2 in the periodic table. The electrode active material is included in the solid components.

Examples of the electrode active material include a positive electrode active material and a negative electrode active material.

### -Positive electrode active material-

The positive electrode active material is not limited, and a known electrode active material used for a positive electrode can be used. The positive electrode active material is preferably a positive electrode active material capable of reversibly intercalating and deintercalating lithium ions.

Specific examples of the positive electrode active material include a transition metal oxide and an element (for example, sulfur) which can be compounded with lithium. Among the above, the positive electrode active material is preferably a transition metal oxide.

The transition metal oxide is preferably a transition metal oxide containing at least one transition metal element (hereinafter, referred to as "element Ma") selected from the group consisting of cobalt (Co), nickel (Ni), iron (Fe), manganese (Mn), copper (Cu), and vanadium (V).

In a case where the transition metal oxide contains Li and the element Ma, a molar ratio (Li/Ma) of Li to Ma is preferably 0.3 to 2.2.

In addition, the transition metal oxide may contain at least one transition metal element (hereinafter, referred to as "element Mb") selected from the group consisting of a Group 1 element other than lithium, a Group 2 element, aluminum (Al), gallium (Ga), indium (In), germanium (Ge), tin (Sn), lead (Pb), antimony (Sb), bismuth (Bi), silicon (Si), phosphorus (P), and boron (B). A content of the element Mb is preferably 0 mol% to 30 mol% with respect to a substance amount of the element Ma.

Examples of the transition metal oxide include transition metal oxides having a bedded salt-type structure, transition metal oxides having a spinel-type structure, lithium-containing transition metal phosphoric acid compounds, lithium-containing transition metal halogenated phosphoric acid compounds, and lithium-containing transition metal silicate compounds.

Examples of the transition metal oxide having a bedded salt-type structure include LiCoO₂ (lithium cobalt oxide [LCO]), LiNi₂O₂ (lithium nickelate), LiNi_{0.85}Co_{0.10}Al_{0.05}O₂ (lithium nickel cobalt aluminum oxide [NCA]), LiNi_{1/3}Co_{1/3}Mn_{1/3}O₂ (lithium nickel manganese cobalt oxide [NMC]), and LiNi_{0.5}Mn_{0.5}O₂ (lithium manganese nickelate).

Examples of the transition metal oxide having a spinel-type structure include LiCoMnO₄, Li₂FeMn₃O₈, Li₂CuMn₃O₈, Li₂CrMn₃O₈, and Li₂NiMn₃O₈.

Examples of the lithium-containing transition metal phosphoric acid compound include an olivine-type iron phosphate salt (for example, LiFePO₄ and Li₃Fe₂(PO₄)₃), a pyrroline phosphate salt (for example, LiFeP₂O₇), a cobalt phosphate salt (for example, LiCoPO₄), and a monoclinic vanadium phosphate salt (for example, Li₃V₂(PO₄)₃ (lithium vanadium phosphate)).

Examples of the lithium-containing transition metal halogenated phosphoric acid compound include an iron fluorophosphate (for example, Li₂FePO₄F), a manganese fluorophosphate (for example, Li₂MnPO₄F), and a cobalt fluorophosphate (for example, Li₂CoPO₄F).

Examples of the lithium-containing transition metal silicate compound include Li₂FeSiO₄, Li₂MnSiO₄, and Li₂CoSiO₄.

The transition metal oxide is preferably a transition metal oxide having a bedded salt-type structure, and more preferably at least one compound selected from the group consisting of LiCoO₂ (lithium cobalt oxide [LCO]), LiNi_{0.85}Co_{0.10}Al_{0.05}O₂ (lithium nickel cobalt aluminum oxide [NCA]), and LiNi_{1/3}Co_{1/3}Mn_{1/3}O₂ (lithium nickel manganese cobalt oxide [NMC]).

The positive electrode active material may be a commercially available product, or may be a synthetic product produced with a known method (for example, a baking method). For example, a positive electrode active material obtained by the baking method may be washed with water, an acidic aqueous solution, an alkaline aqueous solution, or an organic solvent.

In addition, the positive electrode active material may have a carbon coating on the surface thereof.

A shape of the positive electrode active material is not limited, but from the viewpoint of handleability, it is preferably a particle shape.

A volume average particle diameter of the positive electrode active material is not limited, and can be, for example, 0.1 µm to 50 µm. The volume average particle diameter of the positive electrode active material is preferably 0.3 µm to 40 µm and more preferably 0.5 µm to 30 µm.

In a case where the volume average particle diameter of the positive electrode active material is 0.3 µm or more, it is possible to suppress the positive electrode active material from being scattered during handling. In a case where the volume average particle diameter of the positive electrode active material is 40 µm or less, the thickness of the electrode layer can be easily adjusted, and generation of voids in the molding process can be suppressed.

The volume average particle diameter of the positive electrode active material is measured by the following method.

A dispersion liquid containing 0.1% by mass or less of the positive electrode active material is prepared by mixing the positive electrode active material with a solvent (for example, pure water, ethanol, heptane, octane, toluene, or xylene). The dispersion liquid is irradiated with ultrasonic waves of 1 kHz for 10 minutes to be used as a measurement sample. Using a laser diffraction/scattering-type particle size distribution analyzer (for example, LA-960 manufactured by Horiba, Ltd.), data is taken in 50 times under a condition of a temperature of 25°C, and a volume average particle diameter is obtained from a volume frequency-particle size distribution. A quartz cell is used as a cell for the measurement. The above-described measurement is carried out using five samples, and an average of the measured values is defined as the volume average particle diameter of the positive electrode active material. For other detailed conditions, "JIS Z 8828: 2013" is referred to as necessary.

Examples of a method of adjusting the particle diameter of the positive electrode active material include a method of using a pulverizer, a disintegrator, or a classifier. In addition, a known milling method may be applied as the method of adjusting the particle diameter of the positive electrode active material.

One kind of the positive electrode active material may be used alone, or two or more kinds thereof may be used in combination.

In addition, even in a case of using one kind of the positive electrode active material, positive electrode active materials having different particle diameters may be used in combination.

A content of the positive electrode active material with respect to the total volume of the electrode material is preferably 30% by volume to 60% by volume, more preferably 35% by volume to 55% by volume, and still more preferably 40% by volume to 50% by volume.

In the method for manufacturing an electrode layer according to the present disclosure, it is preferable that the amount of the positive electrode active material used is determined such that the content in the electrode layer is within the above-described range.

### -Negative electrode active material-

The negative electrode active material is not limited, and a known electrode active material used for a negative electrode can be used. The negative electrode active material is preferably a negative electrode active material capable of reversibly intercalating and deintercalating lithium ions.

Examples of the negative electrode active material include a carbonaceous material, a metal oxide (for example, tin oxide), silicon oxide, a metal composite oxide, a lithium single substance, a lithium alloy (for example, a lithium aluminum alloy), and a metal capable of forming an alloy with lithium (for example, Sn, Si, and In). Among the above, from the viewpoint of reliability, the negative electrode active material is preferably a carbonaceous material or a lithium composite oxide.

The carbonaceous material is a material substantially consisting of carbon.

Examples of the carbonaceous material include a carbonaceous material obtained by firing petroleum pitch, carbon black (for example, acetylene black), graphite (for example, natural graphite or artificial graphite (for example, vapor-grown graphite)), hard carbon, and a synthetic resin (for example, polyacrylonitrile (PAN) and a furfuryl alcohol resin). Examples of the carbonaceous material also include carbon fiber (for example, polyacrylonitrile-based carbon fiber, cellulose-based carbon fiber, pitch-based carbon fiber, vapor-grown carbon fiber, dehydrated polyvinyl alcohol (PVA)-based carbon fiber, lignin carbon fiber, vitreous carbon fiber, and activated carbon fiber). Examples of the graphite include mesophase microsphere, graphite whisker, and plate-like graphite.

In the present disclosure, the "plate-like" means a shape having two principal planes facing opposite to each other.

The metal composite oxide is preferably a metal composite oxide capable of intercalating and deintercalating lithium.

From the viewpoint of high current density-charging and discharging characteristics, the metal composite oxide capable of intercalating and deintercalating lithium preferably contains at least one element selected from the group consisting of titanium and lithium.

The metal oxide and the metal composite oxide are particularly preferably an amorphous oxide.

The metal oxide and the metal composite oxide are also preferably a chalcogenide. The chalcogenide is a reaction product of a metal element and an element of Group 16 in the periodic table.

Among compound groups consisting of the amorphous oxide and the chalcogenide, an amorphous oxide of a metalloid element or a chalcogenide is preferable, and an oxide containing at least one element selected from the group consisting of elements belonging to Group 13 to Group 15 in the periodic table, Al, Ga, Si, Sn, Ge, Pb, Sb, and Bi, or a chalcogenide is more preferable.

It is also preferable that the negative electrode active material further contains titanium. From the viewpoint that the negative electrode active material containing titanium has excellent high-speed charging and discharging characteristics due to small volume changes during the intercalation and deintercalation of lithium ions, and the suppression of the deterioration of the electrode can improve life of a lithium ion secondary battery, it is preferable that the negative electrode active material containing titanium is lithium titanium oxide (Li₄Ti₅O₁₂ [LTO]).

The negative electrode active material may be a commercially available product, or may be a synthetic product produced with a known method (for example, a baking method). For example, a negative electrode active material obtained by the baking method may be washed with water, an acidic aqueous solution, an alkaline aqueous solution, or an organic solvent.

The negative electrode active material is available, for example, as CGB20 (Nippon Kokuen Group).

The composition of the negative electrode active material is measured by inductively coupled plasma (ICP) emission spectroscopy.

A shape of the negative electrode active material is not limited, but is preferably a particle shape from the viewpoint of ease of handling and ease of managing uniformity in a case of mass production.

A volume average particle diameter of the negative electrode active material is preferably 0.1 µm to 60 µm, more preferably 0.3 µm to 50 µm, and particularly preferably 0.5 µm to 40 µm.

The volume average particle diameter of the negative electrode active material is measured with a method based on the method of measuring the volume average particle diameter of the positive electrode active material described above.

Examples of a method of adjusting the particle diameter of the negative electrode active material include a method of using a pulverizer or a classifier.

One kind of the negative electrode active material may be used alone, or two or more kinds thereof may be used in combination.

In addition, even in a case of using one kind of the negative electrode active material, negative electrode active materials having different particle diameters may be used in combination.

A content of the negative electrode active material with respect to the total volume of the electrode material is preferably 30% by volume to 60% by volume, more preferably 35% by volume to 57% by volume, and still more preferably 45% by volume to 55% by volume.

In the method for manufacturing an electrode layer according to the present disclosure, it is preferable that the amount of the negative electrode active material used is determined such that the content in the electrode layer is within the above-described range.

Surfaces of the positive electrode active material and the negative electrode active material may be coated with a surface coating agent, respectively. Examples of the surface coating agent include a metal oxide containing Ti, Nb, Ta, W, Zr, Si, or Li. Examples of the above-described metal oxide include a titanium oxide spinel, a tantalum-based oxide, a niobium-based oxide, and a lithium niobate-based compound.

### (Conductive auxiliary agent)

From the viewpoint of improving electron conductivity of the electrode active material, the electrode material contains a conductive auxiliary agent. The conductive auxiliary agent is not limited, and a known conductive auxiliary agent can be used.

The conductive auxiliary agent is included in the solid components.

Examples of the conductive auxiliary agent include graphite (for example, natural graphite and artificial graphite), carbon black (for example, acetylene black, Ketjen black, and furnace black), amorphous carbon (for example, needle coke), carbon fiber (for example, vapor-grown carbon fiber and carbon nanotube), other carbonaceous materials (for example, graphene and fullerene), metal powder (for example, copper powder and nickel powder), metal fiber (for example, copper fiber and nickel fiber), and a conductive polymer (for example, polyaniline, polypyrrole, polythiophene, polyacetylene, and a polyphenylene derivative).

The conductive auxiliary agent may be used alone or in combination of two or more kinds thereof.

A content of the conductive auxiliary agent with respect to the total volume of the electrode material is preferably 0.05% by volume to 5% by volume, more preferably 0.1% by volume to 4% by volume, and still more preferably 0.5% by volume to 3% by volume.

In the method for manufacturing an electrode layer according to the present disclosure, it is preferable that the amount of the conductive auxiliary agent used is determined such that the content in the electrode layer is within the above-described range.

### (Electrolytic solution)

The electrode material contains an electrolytic solution. The electrolytic solution is not particularly limited, and a known electrolytic solution can be used. Examples of the electrolytic solution include an electrolytic solution containing an electrolyte and a solvent. Specific examples of the electrolytic solution include an electrolytic solution containing a lithium salt compound as the electrolyte and a carbonate compound as the solvent.

Examples of the lithium salt compound include lithium hexafluorophosphate. The electrolytic solution may contain only one kind of the lithium salt compound or may contain two or more kinds of the lithium salt compounds.

Examples of the carbonate compound include a chain-like carbonate compound such as ethyl methyl carbonate (also referred to as EMC), dimethyl carbonate (also referred to as DMC), and diethyl carbonate (DEC); and a cyclic carbonate compound such as ethylene carbonate (also referred to as EC) and propylene carbonate (also referred to as PC). The electrolytic solution may contain only one kind of the carbonate compound, may contain two or more kinds of the carbonate compounds, or may contain a combination of one or more kinds of the chain-like carbonate compounds and one or more kinds of the cyclic carbonate compounds.

As the electrolyte contained in the electrolytic solution, for example, a known inorganic solid electrolyte can also be used.

As a component of the electrolytic solution, for example, an ionic liquid may be used. The ionic liquid may be used as the electrolyte or the solvent.

A content of the electrolytic solution with respect to the total volume of the electrode material is preferably 70% by volume or less, and may be 50% by volume or less or 40% by volume or less. The lower limit of the content of the electrolytic solution with respect to the total volume of the electrode material is not limited, and may be 20% by volume or more or 30% by volume or more.

The content of the electrolytic solution with respect to the total volume of the electrode material is, for example, preferably 30% by volume to 50% by volume.

### (Solvent)

The electrode material may contain, as the liquid components, a solvent other than the solvent contained as the component of the electrolytic solution (hereinafter, also simply referred to as "solvent").

Examples of the solvent include an alcohol compound solvent, an ether compound solvent, an amide compound solvent, an amino compound solvent, a ketone compound solvent, an aromatic compound solvent, an aliphatic compound solvent, and a nitrile compound solvent.

A boiling point of the solvent at normal pressure (that is, 1 atm) is preferably 50°C or higher, and more preferably 70°C or higher. The upper limit of the boiling point of the solvent at normal pressure (that is, 1 atm) is preferably 250°C or lower, and more preferably 220°C or lower.

The solvent may be used alone or in combination of two or more kinds thereof.

A content of the liquid components (that is, the electrolytic solution and the solvent) with respect to the total volume of the electrode material is preferably 70% by volume or less, and may be 50% by volume or less or 40% by volume or less. The lower limit of the content of the liquid components with respect to the total volume of the electrode material is not limited, and may be 20% by volume or more or 30% by volume or more.

The content of the liquid components with respect to the total volume of the electrode material is preferably 30% by volume to 50% by volume.

The liquid component contained in the electrode material, that is, the component in the electrode layer, which is in a liquid state at 25°C, is preferably in a liquid state even at -10°C and preferably in a liquid state even at -20°C. That is, the component in the electrode layer, which is in a liquid state at 25°C, is preferably a component which does not solidify at -10°C and preferably a component which does not solidify at -20°C.

### (Other components)

The electrode material may contain an inorganic solid electrolyte, a binder, a dispersant, and other additives, in addition to the above-described components.

From the viewpoint of improving energy density, it is preferable that a content of the binder (also referred to as a resin component) in the electrode material is low, and it is preferably 1% by mass or less and particularly preferably 0% by mass.

The binder contains a resin component and a component referred to as a rheology adjuster or a dispersant, and examples thereof include a fluorine-containing resin, a hydrocarbon-based thermoplastic resin, an acrylic resin, and a urethane resin.

Examples of the dispersant include known dispersants capable of dispersing a dispersion target.

As the other additives, known additives added to the electrode can be used.

### ~Preparation of electrode material~

The electrode material can be prepared, for example, by mixing the electrode active material, the conductive auxiliary agent, and the electrolytic solution, and as necessary, an inorganic solid electrolyte and other components. Examples of the mixing method include a method using a ball mill, a beads mill, a planetary mixer, a blade mixer, a roll mill, a kneader, or a disc mill.

### ~Supply of electrode material~

The method of supplying the electrode material is not limited as long as it is a method of supplying the electrode material to the screw pump, and can be appropriately selected. In addition, the electrode material may be intermittently or continuously supplied to the screw pump. A supply amount of the electrode material can be appropriately selected according to the size, thickness, and the like of the electrode layer to be manufactured.

### <Step B>

In the step B of the method for manufacturing an electrode layer according to the present disclosure, the electrode material supplied onto the collector foil in the above-described step A is leveled to form an electrode layer on the collector foil.

In the step B, the electrode material supplied onto the collector foil in the step A is evenly molded in a layer shape to form an electrode layer. The electrode material supplied in the step A has a thread-like shape by being discharged from the through-hole. In a case where the shielding material has a plurality of (for example, three) through-holes, the number (for example, three) of thread-like electrode materials corresponding to the number of the through-holes is supplied onto the collector foil.

Here, an example of the step B will be described with reference to FIG. 1. FIG. 1 is a schematic view for describing a part where the electrode layer is manufactured.

The manufacturing apparatus 100 for an electrode layer shown in FIG. 1 is composed of the supply section A and the film forming section B, and the blade 30 and the piezoelectric blade 40 are sequentially disposed in the film forming section B in the arrow direction. A collector 35 moves in the arrow direction together with the pallet 50 moving in the arrow direction, and the electrode material supplied onto the collector foil 35 in the supply section A passes through the fixed-blade 30 and thus is formed in a layer shape. Next, the electrode material having a layered shape passes through the piezoelectric blade 40, and the thickness of the electrode material is adjusted, thereby manufacturing a desired electrode layer 37.

The method of leveling the electrode material can be performed using a regulating member such as a blade and a roller.

The regulating member may vibrate in a case of coming into contact with the electrode material.

The blade is a plate-like member having a flat surface. A shape, size, material, and the like of a contact portion which comes into contact with the electrode material may be appropriately selected depending on the kind of the electrode material (the kind of the electrode active material, the concentration of solid components, the formulation (viscosity, surface tension, and the like) of the electrolytic solution, and the like), the size and thickness of the electrode layer to be manufactured, and the like.

It is preferable that the contact portion of the blade with the electrode material is less likely to cause the electrode material to adhere thereto; and for example, at least the contact portion of the blade preferably exhibits releasability. For example, the blade may be a blade made of a resin (fluororesin such as polytetrafluoroethylene (PTFE), polyether ether ketone (PEEK), or the like), a blade made of a metal (stainless steel, aluminum, iron, a hard alloy, or the like), or a blade made of a ceramic. In addition, from the viewpoint of imparting releasability to the surface of the contact portion of the blade, the blade may have a surface layer (for example, a surface layer containing a fluorine-based resin, and a surface layer containing silicon-based particles and a resin) exhibiting the releasability. Furthermore, from the viewpoint of improving abrasion resistance of the blade, the blade may have a high-hardness coating film such as titanium oxide, titanium nitride (TiN), and tungsten carbide on a metal or ceramic blade body.

In a case of leveling the electrode material to manufacture the electrode layer, the electrode material supplied onto the collector foil can be formed into a layer shape having a predetermined thickness on the collector foil by relatively moving the regulating member (for example, the blade) and the collector foil. As a result, the electrode layer is formed. The relative movement may be an aspect in which the regulating member (for example, the blade) is moved in one direction with respect to the fixed collector foil, an aspect in which the collector foil is moved with respect to the regulating member (for example, the blade), or an aspect in which both the collector foil and the regulating member (for example, the blade) are moved in different directions or in the same direction at different speeds. From the viewpoint of continuously manufacturing the electrode layer, an aspect in which a long collector foil is used and the long collector foil is transported and moved with respect to a fixed regulating member (for example, the blade) to level the electrode material is preferable.

In addition, in a case where the blade is used, a regulating member which regulates the width length of the electrode material may be provided at both end parts of the blade in the width direction, and the thickness of the electrode material and the width of the electrode material may be regulated simultaneously or non-simultaneously (that is, with a time difference).

In a case of leveling the electrode material, vibration may be applied to the regulating member (for example, the blade). The vibration can be applied by, for example, an exciter. The vibration propagates to the electrode material and a shearing force is applied, whereby a decrease in viscosity, an improvement in fluidity, and the like can be caused at least in a contact portion of the electrode material with the regulating member (for example, the blade). In this manner, the surface state of the manufactured electrode layer is improved, and an electrode layer having a small thickness variation can be obtained.

### (Electrode layer)

The electrode layer contains the electrode active material, the conductive auxiliary agent, and the electrolytic solution, and may contain an inorganic solid electrolyte and other components as necessary. Details of each component are as described above, and thus the description thereof will be not be repeated here.

A thickness of the electrode layer is preferably 100 µm to 1000 µm, and more preferably 200 µm to 600 µm. The thickness of the electrode layer is an arithmetic average value of thicknesses at any three points measured by cross-sectional observation. In the cross-sectional observation, a known microscope (for example, a scanning electron microscope) can be used.

### <Other steps>

The method for manufacturing an electrode layer according to the present disclosure may include other steps.

Examples of the other steps include a step of pressurizing the electrode layer, and a step of transferring the electrode layer on a release paper to a collector in a case where the release paper is used as a support material.

### (Step of pressurizing electrode layer)

By including the step of pressurizing the electrode layer, the density of the electrode material can be further increased, and the in-plane uniformity of the density and the thickness can be further increased.

Examples of a pressurization unit include a pair of pressurizing rolls and a press machine.

The pressure in a case of pressurizing the electrode material is preferably 0.01 MPa to 100 MPa, more preferably 0.1 MPa to 50 MPa, and particularly preferably 0.2 MPa to 10 MPa.

The pressurization of the electrode layer may be performed stepwise using a plurality of pressurization units (for example, a pair of pressurizing rolls). In a case where the electrode layer is subjected to stepwise pressurization using a plurality of pressurization units, the uniformity of the density and the thickness of the electrode material can be further enhanced. For example, the electrode material film can be pressurized stepwise using a plurality of pairs of pressurizing rolls, in which a gap between the rolls is stepwise adjusted to be narrowed.

It is preferable that the pressurization is performed by relatively moving the pressurization unit and the electrode layer. The "relatively moving the pressurization unit and the electrode layer relative to each other" includes moving the pressurization unit in one direction with respect to the electrode layer, moving the electrode layer in one direction with respect to the pressurization unit, and moving the pressurization unit and the electrode layer in different directions or in the same direction at different speeds. Among these, it is preferable that the electrode layer is moved in one direction with respect to the pressurization unit.

Examples of the unit which moves the electrode layer include a belt conveyor, a linear motion guide, and a cross roller table.

In addition, from the viewpoint of improving formability, the pressurization may be performed on, for example, an electrode layer heated to 30°C to 100°C.

### Examples

Hereinafter, the present disclosure will be described in more detail with reference to Examples. However, the present disclosure is not limited to Examples described below as long as it is within the gist thereof.

### <Example 1>

### (Preparation of collector foil)

Positive electrode collector foil (S1): aluminum foil (average thickness: 20 µm, Ra: 0.5 µm, EAA-218D, carbon-coated product manufactured by Korea JCC.)
Negative electrode collector foil (S2): copper foil (average thickness: 10 µm, Ra: 0.55 µm, manufactured by Nippon Denkai,Ltd.)

The Ra of the collector described above refers to an arithmetic average roughness Ra on a surface on which the electrode layer is formed.

### (Preparation of apparatus)

A manufacturing apparatus configured in the same manner as in FIG. 1 was prepared.

Specifically, one first screw pump 10 and three second screw pumps 20 were prepared, and the three second screw pumps were connected to the first screw pump through the pipe 16. The pipe 16 connected to the first screw pump was branched in three directions in order to be connected to the three second screw pumps. The first screw pump 10 included the cylindrical housing 4 having one end with the hopper 12 (supply port) for supplying the electrode material and the other end with the discharge port 6 for discharging the electrode material. The second screw pump 20 included the cylindrical housing 4 having one end with the pipe 16 (supply port) to which the electrode material was supplied and the other end with the discharge port 6 for discharging the electrode material. The pipe 16 had an inner diameter of φ10 mm. In the cylindrical housing of the first screw pump 10 and the second screw pump 20, the screw 2 was installed rotatably. In addition, each screw had a pitch region including the conveyor portion (i) and the densification extrusion portion (ii) as shown in FIG. 5, and the helical pitch was narrowed in the downstream discharge direction of the electrode material. A change in pitch width from the pitch having the widest width to the pitch having the narrowest width was 50%.

In addition, the shielding material 8 having the outlet (through-hole) 3 having a circular cross section was disposed at the discharge port 6 of each second screw pump 20. One end of the screw on the downstream side of the axial core of the screw was supported by the shielding material 48 as shown in FIG. 2. The discharge holes 3 were disposed at three positions at regular intervals along the circumferential direction as shown in FIG. 6. A hole diameter (diameter) of the discharge port 3 was set to φ6 mm. The clearance s1 between the shielding surface 8a and the downstream edge surface 2a of the screw blade in the second screw pump was set to 1 mm. In addition, in the second screw pump 20, the shortest distance between the screw blade and the inner wall surface of the cylindrical housing was 0.5 mm.

As the blade 30, a stainless steel blade was used, and the piezoelectric blade 40 was disposed downstream of the blade 30.

### (Production of electrode layer)

13.4 g of LiPF₆ (electrolyte) was mixed with a mixed solution obtained by mixing 45 g of ethylene carbonate (EC), 10 g of propylene carbonate (PC), and 45 g of diethyl carbonate (DEC), and then 2.3 g of vinylene carbonate (VC) was further mixed therewith. 64 g of the obtained 115.7 g of the mixed solution was taken out, and used as an electrolytic solution X1.

The manufacturing apparatus 100 configured in the same manner as in FIG. 1 was prepared, the electrode material for a positive electrode was supplied onto the long-shaped collector foil 35 which was transported by being disposed on the movable pallet 50, and an electrode layer 37 was produced.

Specifically, in the supply section A including the screw pump, 174 g of a positive electrode active material (iron phosphate; "LFP NCO M121" manufactured by Aleees), 2 g of a conductive auxiliary agent (Ketjen black; "Carbon ECP600JD" manufactured by LION SPECIALTY CHEMICALS CO., LTD.), and the electrolytic solution X1 were respectively put into the charging hopper 12 of the manufacturing apparatus as the electrode material 14, thereby supplying the electrode material 14 to the first screw pump 10. The screw installed in the cylindrical housing of the first screw pump 10 was activated and rotated to discharge the electrode material 14 while mixing each component of the electrode material 14, and the electrode material 14 was supplied to each of the three second screw pumps 20 through the three connection pipes 16 by the discharge port. The screws of the three second screw pumps 20 were rotated, the electrode material 14 was fed to the downstream of each second screw pump 20, and the electrode material was further sheared and pressed in each second screw pump while being discharged from the discharge port of each second screw pump and supplied onto the positive electrode collector foil (S1) 35 which was moved by the pallet 50 (step A).

The supplied electrode material for a positive electrode was a Bingham plastic fluid having a yield value of 50 kPa, and a volume ratio of the solid components and the liquid components was 48:52.

Next, in the film forming section B in which the blade 30 and the piezoelectric blade 40 were sequentially disposed in the arrow direction, the positive electrode collector 35 was moved in the arrow direction by the pallet 50, so that the electrode material 14 passed through the fixedly disposed blade 30 and was formed in a layered shape. Thereafter, the positive electrode collector foil 35 was further transported to pass through the piezoelectric blade 40 to adjust the thickness of the electrode material formed in a layered shape, and an electrode layer having a thickness of 325 µm was produced (step B).

### <Example 2>

The manufacturing apparatus configured in the same manner as the apparatus prepared in Example 1 was prepared. In addition, the same electrolytic solution X1 (64 g) used for the electrode material for a positive electrode prepared in Example 1 was prepared.

Using the same manufacturing apparatus as that of Example 1, in the supply section A including the screw pump, a conductive auxiliary agent (Carbon black: "C-NERGY SUPER C45" manufactured by Imerys Graphite & Carbon), a negative electrode active material ("MESOPHASE GRAPHITE POWDER A (MGP-A)" manufactured by China Steel Chemical Corporation), and the electrolytic solution X1 were respectively put into the charging hopper 12 of the manufacturing apparatus as the electrode material 14, thereby supplying the electrode material 14 to the first screw pump 10. The ratio of the conductive auxiliary agent and the negative electrode active material was set to 2.7:63.4 (= conductive auxiliary agent: negative electrode active material) in terms of mass ratio. In addition, 64 g of the electrolytic solution X1 was added with respect to the total amount of 159 g of the conductive auxiliary agent and the negative electrode active material.

The screw 2 installed in the cylindrical housing of the first screw pump 10 was activated and rotated to discharge the electrode material 14 while mixing each component of the electrode material 14, and the electrode material 14 was supplied to each of the three second screw pumps 20 through the three connection pipes 16 by the discharge port. The screws 2 of the three second screw pumps 20 were rotated, the electrode material 14 was fed to the downstream of each second screw pump 20, and the electrode material was further sheared and pressed in each second screw pump while being discharged from the discharge port of each second screw pump and supplied onto the negative electrode collector foil (S2) 35 which was moved by the pallet 50 (step A).

The supplied electrode material for a negative electrode was a Bingham plastic fluid having a yield value of 30 kPa, and a volume ratio of the solid components and the liquid components was 52:48.

Next, in the film forming section B in which the blade 30 and the piezoelectric blade 40 were sequentially disposed in the arrow direction, the negative electrode collector 35 was moved in the arrow direction by the pallet 50, so that the electrode material 14 passed through the fixedly disposed blade 30 and was formed in a layered shape. Thereafter, the negative electrode collector foil 35 was further transported to pass through the piezoelectric blade 40 to adjust the thickness of the electrode material formed in a layered shape, and an electrode layer having a thickness of 335 µm was produced (step B).

### <Example 3>

An electrode layer was produced in the same manner as in Example 1, except that the same electrode material for a positive electrode as in Example 1 was used, the second screw pump 20 was not used, and the positive electrode collector foil 35 was supplied (step A) from the pipe 16 (inner diameter: φ10 mm) connected to the first screw pump 10.

### <Example 4>

An electrode layer was produced in the same manner as in Example 1, except that the same electrode material for a positive electrode as in Example 1 was used, the number of the second screw pumps was changed from 3 to 5, and the branch of the pipe 16 connected to the first screw pump 10 was changed from 3 directions to 5 directions to connect the five second screw pumps (the hole diameter of each outlet was 6 mm).

### <Example 5>

An electrode layer was produced in the same manner as in Example 1, except that the same electrode material for a positive electrode as in Example 1 was used, and a material obtained by mixing the electrode material for a positive electrode with a pre-kneaded material of "Awatori Renta" (manufactured by Shinky Co., Ltd.) at 1,500 revolutions per minute (rpm) for 30 seconds was put into the first screw pump 10.

### <Example 6>

An electrode layer was produced in the same manner as in Example 2, except that the same electrode material for a negative electrode as in Example 2 was used, and a material obtained by mixing the electrode material for a negative electrode with a pre-kneaded material of "Awatori Renta" (manufactured by Shinky Co., Ltd.) at 1,500 rpm for 30 seconds was put into the first screw pump 10.

### <Example 7>

An electrode layer was produced in the same manner as in Example 1, except that, in Example 1, the hole diameter (diameter) of the outlet 3 of the second screw pump 20 was changed from φ6 mm to φ10 mm.

### <Example 8>

An electrode layer was produced in the same manner as in Example 1, except that, in Example 1, the clearance s1 between the shielding surface 8a and the downstream edge surface 2a of the screw blade in the second screw pump was changed from 1 mm to 3 mm.

### <Comparative Example 1>

An electrode layer was produced in the same manner as in Example 1, except that the same electrode material for a positive electrode as in Example 1 was used, the screw pump was not used, and the electrode material for a positive electrode was stirred and kneaded with "Awatori Renta" (manufactured by Shinky Co., Ltd.) in advance at 1,500 rpm for 30 seconds, and supplied as it was onto the positive electrode collector foil (S1) 35 (step A).

### (Evaluation)

### (1) Evaluation of thickness

A thickness distribution of the produced electrode layer was measured with a laser displacement meter, and evaluated based on the following standard. The measurement was performed downstream of the piezoelectric blade 40.

### <Standard>

A: 3% or less
B: more than 3% and 5% or less
C: more than 5% and 10% or less
D: more than 10%

### (2) Evaluation of surface state

An inspection camera was installed downstream of the piezoelectric blade 40, and the frequency of exposure (defects) of the collector foil was detected. Among six electrode layers in which the electrode layer having an area of 210 mm × 150 mm was continuously produced, the first electrode layer at the start of coating was not evaluated, and the remaining five electrode layers were evaluated according to the following standard.

### <Standard>

A: the number of defects counted was 0.
B: the number of defects counted was 1 or more and less than 5.
C: the number of defects counted was 5 or more and less than 10.
D: the number of defects counted was 10 or more.

**[Table 1]**

| | Electrode material | Pre-kneading | Condition of screw pump | | Evaluation of thickness | Evaluation of surface state |
|---|---|---|---|---|---|---|
| | | | First screw pump | Second screw pump | | |
| Example 1 | Positive electrode | N | One pump | Yes: three pumps | B | B |
| | | | Number of branches of pipe: 3 | Hole diameter: φ6 mm | | |
| | | | | Clearance sl: 1 mm | | |
| Example 2 | Negative electrode | N | One pump | Yes: three pumps | A | A |
| | | | Number of branches of pipe: 3 | Hole diameter: φ6 mm | | |
| | | | | Clearance sl: 1 mm | | |
| Example 3 | Positive electrode | N | One pump | No | C | C |
| Example 4 | Positive electrode | N | One pump | Yes: five pumps | A | A |
| | | | Number of branches of pipe: 5 | Hole diameter: φ6 mm | | |
| | | | | Clearance sl: 1 mm | | |
| Example 5 | Positive electrode | Y | One pump | Yes: three pumps | C | C |
| | | | Number of branches of pipe: 3 | Hole diameter: φ6 mm | | |
| | | | | Clearance sl: 1 mm | | |
| Example 6 | Negative electrode | Y | One pump | Yes: three pumps | C | C |
| | | | Number of branches of pipe: 3 | Hole diameter: φ6 mm | | |
| | | | | Clearance sl: 1 mm | | |
| Example 7 | Positive electrode | N | One pump | Yes: three pumps | C | D |
| | | | Number of branches of pipe: 3 | Hole diameter: φ10 mm | | |
| | | | | Clearance sl: 1 mm | | |
| Example 8 | Positive electrode | N | One pump | Yes: three pumps | D | C |
| | | | Number of branches of pipe: 3 | Hole diameter: φ6 mm | | |
| | | | | Clearance sl: 3 mm | | |
| Comparative Example 1 | Positive electrode | - | - | - | D | Not measurable |

The details of the abbreviations in Table 1 are as follows.
Hole diameter: diameter of the outlet 3 of the second screw pump
Number of branches of pipe: number of branches of the pipe connected to the first screw pump for connection to the second screw pump
Clearance s1: shortest distance between the shielding surface 8a and the downstream edge surface 2a of the screw blade in the second screw pump

As shown in Table 1, it was found that the electrode layer of each of Examples had a favorable thickness and surface state, and had high uniformity of the material density in the electrode layer. On the other hand, in Comparative Example 1 in which the material was supplied onto the collector foil only by kneading with a mixer without using the screw pump, the thickness distribution was large, the material density was non-uniform, and a large number of defects in which the collector foil was exposed were recognized over the entire surface.

In addition, as is clear from the comparison between Examples 1 and 2 and Examples 5 and 6, in a case where each component was directly supplied to the screw pump without being kneaded in advance before being put into the screw pump (Examples 1 and 2), the uniformity of the material density was excellent as compared with a case where the components were kneaded in advance (Examples 5 and 6). As the configuration of the screw pump, a multistage configuration using the first screw pump and the second screw pump was preferable, and in a case where the number of the second screw pumps in the second stage was increased from 3 to 5, the uniformity was further improved.

The uniformity was improved in Example 1 in which the hole diameter of the outlet was φ6 mm, as compared with Example 7 in which the hole diameter of the outlet was φ10 mm. In addition, the uniformity was further improved in Example 1 in which the clearance s1 was 1 mm, as compared with Example 8 in which the clearance s1 was 3 mm.
1: screw pump
2: screw
2a: downstream edge surface of screw blade
2b: screw blade
3: through-hole
4: cylindrical housing
6: discharge port
8: shielding material
8a: shielding surface
10: first screw pump
12: hopper
14: electrode material
16: connection pipe
20: second screw pump
30: blade
35: collector foil
37: electrode layer
40: piezoelectric blade
50: pallet
100: manufacturing apparatus of electrode layer
200: extruder in related art
A: supply section
B: film forming section
s1, s2: clearance
i: conveyor portion
ii: densification extrusion portion

The disclosure of Japanese Patent Application No. 2023-065941 filed on April 13, 2023 is incorporated in the present specification by reference.

All documents, patent applications, and technical standards described in the present specification are incorporated herein by reference to the same extent as in a case of being specifically and individually noted that individual documents, patent applications, and technical standards are incorporated herein by reference.

## Claims

1. A method for manufacturing an electrode layer, comprising:
a step A of supplying an electrode material which contains an electrode active material, a conductive auxiliary agent, and an electrolytic solution, and has a concentration of solid components of 40% by volume to 80% by volume onto a collector foil using a screw pump; and
a step B of leveling the electrode material supplied onto the collector foil to form an electrode layer on the collector foil,
wherein the screw pump includes
a cylindrical housing that has, at one end, a supply port through which the electrode material is supplied, and has, at the other end, a discharge port through which the electrode material is discharged,
a screw that is installed rotatably inside the cylindrical housing and has a pitch region having a helical pitch decreasing in a downstream discharge direction of the electrode material, and
a shielding material that is disposed at the discharge port, and
the shielding material has a surface intersecting an axial direction of the screw and a through-hole penetrating the surface, the surface faces a downstream edge surface of a screw blade of the screw in a noncontact manner, and the through-hole is provided at a position facing the downstream edge surface.

2. The method for manufacturing an electrode layer according to claim 1,
wherein the shielding material supports one end of the screw on a downstream side of an axial core of the screw.

3. The method for manufacturing an electrode layer according to claim 1 or 2,
wherein a clearance between the surface intersecting the axial direction and the downstream edge surface of the screw blade is 3 mm or less.

4. The method for manufacturing an electrode layer according to claim 1 or 2,
wherein the screw pump has a first screw pump and a second screw pump which is connected to the first screw pump through a pipe and has a smaller discharge volume than the first screw pump, and the first screw pump and the second screw pump include the cylindrical housing, the screw, and the shielding material.

5. The method for manufacturing an electrode layer according to claim 1 or 2,
wherein the shielding material has two or more of the through-holes, and the two or more of the through-holes are provided at regular intervals along a circumferential direction of the screw.

6. The method for manufacturing an electrode layer according to claim 1 or 2,
wherein the helical pitch in the pitch region is changed by 50% or more.

7. The method for manufacturing an electrode layer according to claim 1 or 2,
wherein, in the step A, the electrode active material, the conductive auxiliary agent, and the electrolytic solution are supplied to the screw pump without being mixed in advance.
